# EUROPÄISCHE PATENTSCHRIFT

(11) **EP 1 495 863 B1**
(45) Veröffentlichungstag und Bekanntmachung des Hinweises auf die Patenterteilung: **05.09.2007**
(21) Anmeldenummer: 04016092.1
(22) Anmeldetag: 08.07.2004
(51) Int. Cl.: B32B 41/00

(54) **Verfahren und eine Vorrichtung zur Herstellung eines Flächengebildes**
Method and apparatus for producing a flat product
Méthode et appareil pour la fabrication d'un produit plat

(30) Priorität: 11.07.2003 DE 10331509
(43) Veröffentlichungstag der Anmeldung: 12.01.2005
(73) Patentinhaber: Infineon Technologies AG, 81669 München (DE)
(72) Erfinder: Lauterbach, Christl, 85635 Höhenkirchen-Siegertsbrunn (DE); Jung, Stefan Dr. Ing., 81249 München (DE)
(74) Vertreter: Müller-Boré & Partner Patentanwälte

(56) Entgegenhaltungen:
- EP-A- 1 321 281
- US-A- 4 312 686
- US-A- 5 908 575
- US-A- 6 022 429
- US-A- 6 030 474
- US-A1- 2001 023 869
- US-B1- 6 264 296

## Beschreibung

Die vorliegende Erfindung betrifft ein Verfahren und eine Vorrichtung zur Herstellung eines Flächengebildes.

Bei der Herstellung von Flächengebilden, z.B. Laminaten, werden verschiedene Kunststoffmassen auf einen Träger aufgetragen. Diese Kunststoffmassen müssen während der Herstellung in Heizkanälen erhitzt und durch Kühlwalzen abgekühlt werden. Hierbei wird die Leistung der Heizkanäle und Kühlwalzen beim Einfahren der Maschine empirisch eingestellt. Die Leistung wird hierbei derart eingestellt, um den ordnungsgemäßen Produktionsverlauf mit großer Sicherheit zu gewährleisten. Dies bedeutet, daß die Temperatur in der Regel in den Heizkanälen höher bzw. in der Kühlwalzen niedriger als tatsächlich benötigt eingestellt wird. Häufig ist jedoch eine derart hohe Leistung wie eingestellt nicht notwendig. Dies führt zu einem hohen Energieverbrauch während des Herstellungsprozesses.

Die US 5 908 575 A beschreibt ein Verfahren, sowie eine Vorrichtung zum Schmelzverbinden von Polyethylenrohren. Dabei wird eine Leistungsversorgungseinheit von einer entfernten Energiequelle mit konstanter Leistung beliefert und stellt ihrerseits eine Ausgangsleistung und relativ hoher Frequenz bereit. Diese hochfrequente Ausgangsleistung wird an eine heizbare Schmelzeinrichtung übertragen und kann in Abhängigkeit von der Umgebungstemperatur an der Schmelzeinrichtung geregelt werden. Über eine Strichcode-Leseeinrichtung können Daten, wie beispielsweise Größe oder Material der zu verschmelzenden Rohre bzw. Fittings, die in Form eines Strichcodes an den zu verarbeitenden Werkstücken angebracht sind, automatisch ausgelesen und zur Steuerung der Ausgangsleistung genutzt werden.

Es ist somit eine Aufgabe der vorliegenden Erfindung ein Verfahren und eine Vorrichtung zur Herstellung eines Flächengebildes bereitzustellen, die einen energiesparenden Betrieb ermöglichen.

Diese Aufgabe wird gemäß der Erfindung gelöst durch ein Verfahren mit den in Anspruch 1 angegebenen Merkmalen und eine Vorrichtung mit den in Anspruch 9 angegebenen Merkmalen. Bevorzugte Ausführungsformen sind Inhalt der abhängigen Ansprüche.

Gemäß der Erfindung wird ein Verfahren zur Herstellung eines Flächengebildes unter Verwendung eines Ausgangsflächengebildes bereitgestellt, wobei das Verfahren einen Herstellungsprozeß mit zumindest einem Prozeßparameter aufweist und die folgenden Schritte umfaßt:
- Anordnen bzw. Aufbringen bzw. Einbringen zumindest eines Informationsträgers an und/oder in dem Ausgangsflächengebilde;
- Auslesen der Daten des Informationsträgers;
- Anpassen bzw. Steuern bzw. Regeln zumindest eines der Prozeßparameter entsprechend der ausgelesenen Daten,
wobei der Informationsträger zumindest einen darin integrierten Sensor umfaßt und das Verfahren ferner einen Schritt des Messens von Prozeßdaten durch den Sensor umfaßt, und
wobei der Schritt des Auslesens der Daten des Informationsträgers einen Schritt des Auslesens der gemessenen Prozeßdaten umfaßt.

Ein Ausgangsflächengebilde ist hierbei ein Flächengebilde, welches zu Beginn des Herstellungsprozesses vorhanden ist. Dieses Ausgangsflächengebilde kann während des Herstellungsprozesses bearbeitet bzw. verarbeitet werden. Vorzugsweise bildet das Ausgangsflächengebilde einen Teil des hergestellten Flächengebildes. Alternativ kann das Ausgangsflächengebilde jedoch auch von dem Endprodukt abgelöst bzw. entfernt werden.

Die Prozeßparameter sind Einstellungen bzw. Variablen des Herstellungsprozesses, welche vor und/oder während des Herstellungsverfahrens eingestellt bzw. verändert werden können. Beispielsweise können Prozeßparameter Temperatureinstellungen, Vorschubgeschwindigkeiten, usw. sein.

Vorzugsweise sind die Informationsträger elektronische Einrichtungen, welche infolge einer Anregung durch eine Auslese- bzw. Leseeinrichtung Daten an die Leseeinrichtung übermitteln oder über die Leseeinrichtung auch mit neuen Daten beschrieben werden können.

Die Prozeßdaten sind hierbei Daten, welche während der Durchführung des Verfahrens ermittelt werden und sich bevorzugt auf das in der Herstellung befindliche Produkt beziehen. Vorzugsweise geben diese Daten z.B. Auskunft über die Beschaffenheit und/oder Temperatur des sich in der Herstellung befindlichen Flächengebildes.

Vorzugsweise ist der Sensor ein Temperatursensor. Alternativ oder zusätzlich kann ferner ein Feuchtigkeits- oder Drucksensor oder ein Sensor zur Messung eines elektrischen Leitwerts vorgesehen sein.

Bevorzugt erfolgt der Schritt des Auslesens kontaktlos, d.h. ohne eine Berührung zwischen dem Informationsträger und einer Einrichtung zum Auslesen.

Der Informationsträger ist bevorzugt ein Transponder, am meisten bevorzugt ein Radiofrequenz-Identifikations-Tag bzw. RF-ID-Tag. Vorzugsweise kann der Informationsträger ein passiver Transponder sein, d.h. ein Transponder, welcher keine eigene Energierversorgung aufweist.

Vorzugsweise werden die Informationsträger in regelmäßigen Abständen an bzw. in dem Ausgangsflächengebilde angeordnet.

Somit können vorzugsweise in periodischen Abständen insbesondere die Prozeßdaten ausgelesen und die Prozeßparameter entsprechend angepaßt werden.

Vorzugsweise umfaßt das Verfahren ferner einen Schritt des Speicherns der Prozeßdaten in dem Informationsträger.

Das Verfahren kann ferner einen oder mehrere Behandlungsschritte umfassen, insbesondere Erhitzen, Kühlen, Färben, Bedrucken, Imprägnieren, Beschichten, Waschen, Trocknen und/oder Laminieren.

Des weiteren wird gemäß der Erfindung eine Vorrichtung zur Herstellung eines Flächengebildes unter Verwendung eines Ausgangsflächengebildes bereitgestellt, insbesondere zur Verwendung in einem Verfahren gemäß der Erfindung oder einer bevorzugten Ausführungsform davon, umfassend:
- eine Einrichtung zum Anordnen bzw. Aufbringen bzw. Einbringen zumindest eines Informationsträgers an und/oder in dem Ausgangsflächengebilde;
- eine Einrichtung zum Auslesen der Daten des Informationsträgers;
- eine Einrichtung zum Anpassen bzw. Steuern bzw. Regeln zumindest eines Prozeßparameters entsprechend der ausgelesenen Daten,
wobei
- der Informationsträger zumindest einen darin integrierten Sensor umfaßt, welcher ausgelegt ist zum Messen von Prozeßdaten, und
- die Einrichtung zum Auslesen der Daten des Informationsträgers ausgelegt ist zum Auslesen der gemessenen Prozeßdaten.

Vorzugsweise ist die Einrichtung zum Auslesen der Daten des Informationsträgers zum kontaktlosen Auslesen der Daten ausgelegt.

Bevorzugt ist der Informationsträger ein Transponder, am meisten bevorzugt ein RF-ID-Tag, und die Einrichtung zum Auslesen der Daten des Informationsträgers eine Transponder-Leseeinrichtung.

Ferner kann die Vorrichtung eine oder mehrere Behandlungseinrichtungen umfassen, insbesondere Einrichtungen zum Erhitzen, Kühlen, Färben, Bedrucken, Imprägnieren, Beschichten, Waschen, Trocknen und/oder Laminieren.

Des weiteren wird gemäß der Erfindung die Verwendung von Informationsträgern zur Prozeßparameteranpassung bzw. -regelung bzw. -steuerung bei der Herstellung eines Flächengebildes unter Verwendung eines Ausgangsflächengebildes bereitgestellt, wobei zumindest ein Informationsträger an dem Ausgangsflächengebilde angeordnet wird,
wobei der Informationsträger zumindest einen darin integrierten Sensor umfaßt, welcher ausgelegt ist zum Messen von Prozeßdaten, welche zur Prozeßparameteranpassung verwendet werden.

Weitere Merkmale, Aufgabe und Vorteile der vorliegenden Erfindung werden offensichtlich aus der nachfolgenden Beschreibung bevorzugter Ausführungsformen mit Bezug auf die Zeichnungen, in welchen zeigt:
- Fig. 1: eine Vorrichtung gemäß einer bevorzugten Ausführungsform der vorliegenden Erfindung; und
- Fig. 2: einen in der in Fig. 1 gezeigten Vorrichtung verwendeten Informationsträger und eine zugehörige Leseeinrichtung.

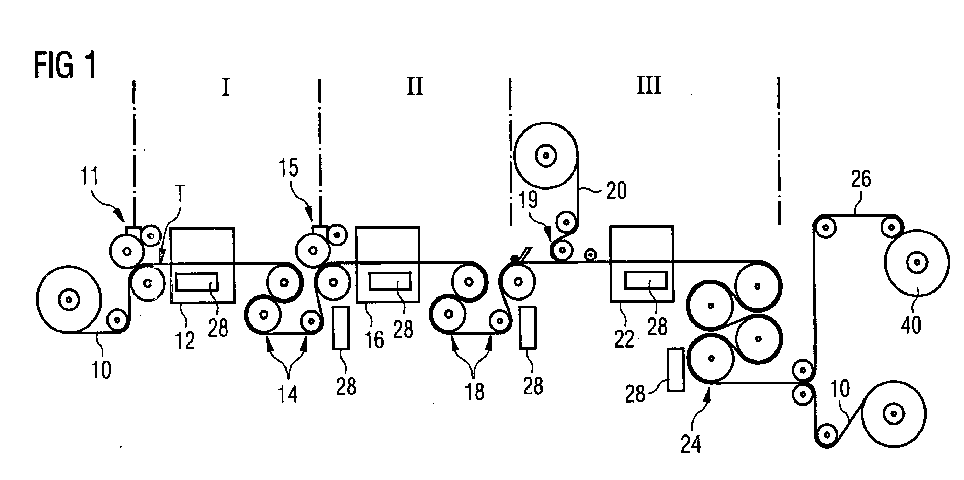

In Fig. 1 ist eine Vorrichtung gemäß einer bevorzugten Ausführungsform der vorliegenden Erfindung gezeigt, welche insbesondere zur Herstellung von Kunstleder geeignet ist.

Die Durchlaufrichtung in der in Fig. 1 gezeigten Vorrichtung ist von links nach rechts in Fig. 1.

In dem mit I markierten Bereich in Fig. 1 ist eine Einrichtung 11 zum Auftragen einer Kunststoffmasse und an der mit Pfeil T in Fig. 1 bezeichneten Stelle eine nicht gezeigte Einrichtung zum Anordnen von Informationsträgern auf bzw. in bzw. an die Kunststoffschicht vorgesehen. Nachfolgend ist ein Heizkanal 12 und mehrere Kühlwalzen 14 vorgesehen. Vorzugsweise werden auf einem breiten flächigen Gebilde mindestens drei Informationsträger parallel auf der gesamten Breite verteilt angeordnet (in der Mitte und an beiden Randbereichen), um eine genaue Temperaturkontrolle über die gesamte Breite zu ermöglichen.

In dem mit II in Fig. 1 bezeichneten Bereich sind in der Durchlaufrichtung eine Einrichtung 15 zum Auftragen einer Kunststoffmasse, ein Heizkanal 16 und Kühlwalzen 18 vorgesehen.

In dem mit III in Fig. 1 bezeichneten Bereich ist eine Einrichtung 19 zum Auftragen eines Untergrundgewebes 20, ein Heizkanal 22 und Kühlwalzen 24 vorgesehen.

In den Heizkanälen 12, 16, 22 und Kühlwalzen 14, 18, 24 bzw. in deren Nähe ist jeweils ein Transponderlesegerät bzw. eine Leseeinrichtung 28 vorgesehen.

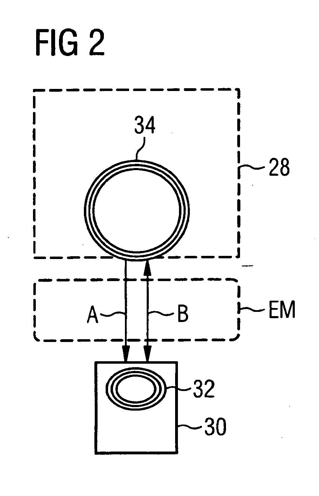

Nachfolgend wird die Funktionsweise der verwendeten Informationsträger mit Bezug auf Fig. 2 beschrieben. Fig. 2 zeigt einen Informationsträger 30 und eine zugehörige Leseeinrichtung bzw. ein zugehöriges Transponderlesegerät 28, welche in der bevorzugten Ausführungsform der Erfindung Verwendung finden.

Vorzugsweise sind die Informationsträger 30 als Radiofrequenz-Identifikations-Tags bzw. RF-ID-Tags 30 ausgebildet. Der RF-ID-Tag 30 umfaßt eine Spule 32, welche durch elektromagnetische Wellen angeregt werden kann. Um den RF-ID-Tag 30 anzuregen, wird eine Leseeinrichtung 28 verwendet, welche ebenfalls eine Spule 34 umfaßt. Der RF-ID-Tag 30 ist vorzugsweise ein passiver Transponder, welcher keine eigene Energieversorgung benötigt.

Zum Auslesen der auf dem RF-ID-Tag 30 gespeicherten Information baut die Leseeinrichtung 28 ein elektromagnetisches Feld auf (in Fig. 2 mit EM gekennzeichnet). Kommt der RF-ID-Tag 30 in das elektromagnetische Feld bzw. Lesefeld, beeinflußt er das Lesefeld derart, daß das Lesegerät die auf dem RF-ID-Tag 30 gespeicherte Information bzw. die Sensordaten auslesen kann. Die Übertragung der Daten erfolgt somit berührungslos. Die übertragene Information wird von der Leseeinrichtung 28 erfaßt, decodiert und entsprechend weiter verarbeitet.

Ferner kann vorgesehen sein, daß die Leseeinrichtung 28 als Le- und Schreibeinrichtung ausgebildet ist und, zusätzlich zum Auslesen von Daten, auch Daten in den Informationsträger schreiben kann. Somit können zusätzlich zum reinen Lesen der Daten der Informationsträger auch Daten auf den Informationsträgern abgespeichert werden.

Die Entfernung zwischen dem RF-ID-Tag 30 und der Leseeinrichtung 28, bei welcher der RF-ID-Tag 30 aktiviert wird, kann je nach Einsatzgebiet variieren. In der Regel liegt der Wert dieser Entfernung in einem Bereich von ca. 5cm bis ca. Im.

In der beschriebenen bevorzugten Ausführungsform umfaßt der RF-ID-Tag 30 einen Sensor wie z.B. einen Temperatursensor oder Feuchtigkeitssensor.

Für den Temperatursensor kann beispielsweise der temperaturabhängige Spannungsabfall über einem integrierten Siliziumwiderstand im Vergleich zu einer Bandgap-ReferenzSpannung Verwendung finden.

In folgenden wird der Betrieb der vorstehend beschriebenen Vorrichtung beschrieben.

In dem mit I markierten Bereich in Fig. 1 wird auf ein Trägerpapier 10, in welchem eine gewünschte Oberflächenstruktur eingeprägt ist, zunächst durch die Einrichtung 11 eine Kunststoffmasse aufgestrichen, sog. Deckstrich. Nachfolgend werden an der mit Pfeil T gekennzeichneten Stelle RF-ID-Tags 30 in die Kunststoffmasse eingebracht bzw. auf dieser angebracht bzw. angeordnet. Vorzugsweise werden RF-ID-Tags 30 in periodischen Abständen in die Kunststoffmasse eingebracht. Der Deckstrich bildet in der beschriebenen Ausführungsform somit das Ausgangsflächengebilde.

Im Heizkanal 12 wird die Kunststoffschicht aktiviert und eine Polymerisation findet statt. Nachfolgend wird die Schicht beim Durchlauf durch Kühlwalzen 14 abgekühlt.

In dem mit II in Fig. 1 bezeichneten Bereich findet nachfolgend ein weiteres Auftragen einer Kunststoffmasse durch Einrichtung 15, der sogenannte Schaumaufstrich, statt. Dieser Schaumaufstrich wird im Heizkanal 16 aktiviert und durch Kühlwalzen 18 abgekühlt.

Nachfolgend wird in dem mit III in Fig. 1 bezeichneten Bereich mit einem Schmelzkleber ein tragendes Untergrundgewebe 20 auflaminiert. Im Heizkanal 22 wird das Laminat fest verbunden und durch Kühlwalzen 24 abgekühlt.

Nachfolgend kann das Trägerpapier 10 abgezogen und das fertige Flächengebilde bzw. Kunstleder 26 auf eine Rolle 40 aufgerollt werden.

Beim Durchlaufen der Heizkanäle 12, 16, 22 und der Kühlwalzen 14, 18, 24 kann mit Hilfe der in bzw. an dem sich in der Herstellung befindlichen Flächengebilde angeordneten RF-ID-Tags 30
die in dem Flächengebilde herrschende Temperatur und/oder Feuchtigkeit ermittelt werden.

Diese Daten werden durch Transponderlesegeräte 28 ausgelesen. In Abhängigkeit der gemessenen Temperatur kann die Temperatur der Heizkanäle 12, 16, 22 und Kühlwalzen 14, 18, 24 durch die jeweiligen Regel- bzw. Steuereinrichtungen (nicht gezeigt) entsprechend angepaßt, d.h. erhöht bzw. erniedrigt werden.

Dadurch kann erreicht werden, daß in jedem Prozeßstadium immer eine nahezu optimale Temperatur, welche für den jeweiligen Prozeßschritt benötigt wird, herrscht. Durch die periodische Anordnung der RF-ID-Tags 30 kann diese Anpassung mit großer Genauigkeit durchgeführt werden. Es kann vermieden werden, daß unnötig hohe bzw. niedrige Temperaturwerte eingestellt werden. Da die Temperatur optimal eingestellt werden kann der Energieverbrauch gesenkt werden,.

Die RF-ID-Tags 30 verbleiben vorzugsweise in dem Flächengebilde und können nachfolgend, vorzugsweise wenn das Flächengebilde für seinem bestimmungsgemäßen Gebrauch eingesetzt wird, beispielsweise für Logistikzwecke während des Herstellungsprozesses oder beim Vertrieb, zur Temperaturüberwachung, Regelung der Klimaanlage und/oder Fechtigkeitsüberwachung in Räumen verwendet werden.

Insbesondere bevorzugt kann das vorstehend beschriebene Verfahren auf den folgenden Gebieten Anwendung finden:

Bei der Teppichbodenherstellung können Transponder auf ein Grundgewebe eingebracht werden und verwendet werden zur Feuchtigkeitskontrolle beim Färben, Waschen und Trocknen und zur Temperaturkontrolle beim Kaschieren des Rückseitengewebes.

Ferner kann das Verfahren eingesetzt werden bei der Herstellung von flächigen technischen Textilien, z.B. Zeltplanen, LKW-Planen, Kunstleder, zur Temperaturkontrolle bei Kaschier- und Laminierprozessen oder bei Färbe-, Wasch- und Trocknungsprozessen, sowie beim Oberflächenveredeln und Imprägnieren von Stoffen für Bekleidung und Wohnraumtextilien oder Textilien im Automobilbau. Des weiteren kann das erfindungsgemäße Verfahren eingesetzt werden bei der Herstellung von Boden- und Wandbelägen ohne textile Komponenten auf Folienbasis.

Bevorzugt wird das erfindungsgemäße Verfahren in Herstellungsprozessen mit Temperaturzyklen eingesetzt. Weiter bevorzugt kann das Verfahren bei der Herstellung von beliebigen Laminaten eingesetzt werden.

### Bezugszeichenliste

- 10: Trägerpapier
- 11: Einrichtung zum Auftragen einer Kunststoffschicht
- 12: Heizkanal
- 14: Kühlwalzen
- 15: Einrichtung zum Auftragen einer Kunststoffschicht
- 16: Heizkanal
- 18: Kühlwalzen
- 19: Einrichtung zum Auftragen eines Untergrundgewebes
- 20: Untergrundgewebe
- 22: Heizkanal
- 24: Kühlwalzen
- 26: Flächengebilde
- 28: Transponderlesegerät
- 30: Informationsträger/RF-ID-Tag
- 32: Spule
- 34: Spule
- 40: Rolle

## Patentansprüche

1. Verfahren zur Herstellung eines Flächengebildes (26) unter Verwendung eines Ausgangsflächengebildes, wobei das Verfahren einen Herstellungsprozeß mit zumindest einem Prozeßparameter aufweist und die folgenden Schritte umfaßt:
- Anordnen zumindest eines Informationsträgers (30) an und/oder in dem Ausgangsflächengebilde;
- Auslesen der Daten des Informationsträgers (30);
- Anpassen zumindest eines der Prozeßparameter entsprechend der ausgelesenen Daten,
**dadurch gekennzeichnet, daß** der Informationsträger (30) zumindest einen darin integrierten Sensor umfaßt und das Verfahren ferner einen Schritt des Messens von Prozeßdaten durch den Sensor umfaßt, und
der Schritt des Auslesens der Daten des Informationsträgers (30) einen Schritt des Auslesens der gemessenen Prozeßdaten umfaßt.

2. Verfahren gemäß Anspruch 1, wobei der Sensor ein Temperatursensor ist.

3. Verfahren gemäß Anspruch 1 oder 2, wobei der Sensor ein Feuchtigkeitssensor ist.

4. Verfahren gemäß einem der Ansprüche 1 bis 3, wobei das Verfahren ferner einen Schritt des Speicherns der gemessenen Prozeßdaten in dem Informationsträger umfaßt.

5. Verfahren gemäß einem der vorgehenden Ansprüche, wobei der Schritt des Auslesens kontaktlos erfolgt.

6. Verfahren gemäß einem der vorgehenden Ansprüche, wobei der Informationsträger (30) ein Transponder ist.

7. Verfahren gemäß einem der vorgehenden Ansprüche, wobei die Informationsträger (30) in regelmäßigen Abständen an dem Ausgangsflächengebilde angeordnet werden.

8. Verfahren gemäß einem der vorgehenden Ansprüche, welches ferner einen oder mehrere Behandlungsschritte umfaßt, insbesondere Erhitzen, Kühlen, Färben, Bedrucken, Imprägnieren, Beschichten, Waschen, Trocknen und/oder Laminieren.

9. Vorrichtung zur Herstellung eines Flächengebildes (26) unter Verwendung eines Ausgangsflächengebildes, insbesondere zur Verwendung in einem Verfahren gemäß einem der vorangehenden Ansprüche, umfassend:
- eine Einrichtung zum Anordnen zumindest eines Informationsträgers (30) an und/oder in dem Ausgangsflächengebilde;
- eine Einrichtung (28) zum Auslesen der Daten des Informationsträgers;
- eine Einrichtung zum Anpassen zumindest eines Prozeßparameters entsprechend der ausgelesenen Daten,
wobei:
- der Informationsträger (30) zumindest einen darin integrierten Sensor umfaßt, welcher ausgelegt ist zum Messen von Prozeßdaten, und
- die Einrichtung (28) zum Auslesen der Daten des Informationsträgers ausgelegt ist zum Auslesen der gemessenen Prozeßdaten.

10. Vorrichtung gemäß Anspruch 9, wobei die Einrichtung (28) zum Auslesen der Daten des Informationsträgers (30) ausgelegt ist zum kontaktlosen Auslesen der Daten.

11. Vorrichtung gemäß einem der Ansprüche 9 oder 10, wobei der Informationsträger (30) ein Transponder und die Einrichtung (28) zum Auslesen der Daten des Informationsträgers (30) eine Transponder-Leseeinrichtung ist.

12. Vorrichtung gemäß einem der Ansprüche 9 bis 11, welches ferner eine oder mehrere Behandlungseinrichtungen (11, 12, 14, 15, 16, 18, 19, 22, 24) umfaßt, insbesondere Einrichtungen zum Erhitzen, Kühlen, Färben, Bedrucken, Imprägnieren, Beschichten, Waschen, Trocknen und/oder Laminieren.

13. Verwendung von Informationsträgern (30) zur Prozeßparameteranpassung bei der Herstellung eines Flächengebildes (26) unter Verwendung eines Ausgangsflächengebildes, wobei zumindest ein Informationsträger an dem Ausgangsflächengebilde angeordnet wird,
**dadurch gekennzeichnet, daß** der Informationsträger (30) zumindest einen darin integrierten Sensor umfaßt, welcher ausgelegt ist zum Messen von Prozeßdaten, welche zur Prozeßparameteranpassung verwendet werden.

## Claims

1. Method for producing a sheet-like structure (26) using a starting sheet-like structure, the method having a production process with at least one process parameter and comprising the following steps:
- arranging at least one information medium (30) on and/or in the starting sheet-like structure;
- reading out the data of the information medium (30);
- adapting at least one of the process parameters in a way corresponding to the data read out, **characterized in that** the information medium (30) comprises at least one sensor integrated in it and the method also comprises a step of measuring process data by the sensor, and the step of reading out the data of the information medium (30) comprises a step of reading out the measured process data.

2. Method according to Claim 1, the sensor being a temperature sensor.

3. Method according to Claim 1 or 2, the sensor being a moisture sensor.

4. Method according to one of Claims 1 to 3, the method also comprising a step of storing the measured process data in the information medium.

5. Method according to one of the preceding claims, the reading-out step taking place contactlessly.

6. Method according to one of the preceding claims, the information medium (30) being a transponder.

7. Method according to one of the preceding claims, the information media (30) being arranged at regular intervals on the starting sheet-like structure.

8. Method according to one of the preceding claims, which also comprises one or more treatment steps, in particular heating, cooling, dyeing, printing, impregnating, coating, washing, drying and/or laminating.

9. Apparatus for producing a sheet-like structure (26) using a starting sheet-like structure, in particular for use in a method according to one of the preceding claims, comprising:
- a device for arranging at least one information medium (30) on and/or in the starting sheet-like structure;
- a device (28) for reading out the data of the information medium;
- a device for adapting at least one process parameter in a way corresponding to the data read out:
- the information medium (30) comprising at least one sensor integrated in it which is designed for measuring process data, and
- the device (28) for reading out the data of the information medium being designed for reading out the measured process data.

10. Apparatus according to Claim 9, the device (28) for reading out the data of the information medium (30) being designed for contactless reading out of the data.

11. Apparatus according to either of Claims 9 and 10, the information medium (30) being a transponder, and the device (28) for reading out the data of the information medium (30) being a transponder reading device.

12. Apparatus according to one of Claims 9 to 11, which further comprises one or more treatment devices (11, 12, 14, 15, 16, 18, 19, 22, 24), in particular devices for heating, cooling, dyeing, printing, impregnating, coating, washing, drying and/or laminating.

13. Use of information media (30) for process parameter adaptation in the production of a sheet-like structure (26) using a starting sheet-like structure, at least one information medium being arranged on the starting sheet-like structure, **characterized in that** the information medium (30) comprises at least one sensor integrated in it which is designed for measuring process data which is used for adapting process parameters.

## Revendications

1. Procédé de fabrication d'un produit plan (26) en utilisant un produit plan initial, le procédé présentant un processus de fabrication avec au moins un paramètre de processus et comprenant les étapes suivantes :
- disposition d'au moins un support d'informations (30) sur et/ou dans le produit plan initial ;
- lecture des données du support d'informations (30) ;
- adaptation d'au moins l'un des paramètres de processus en fonction des données lues,
**caractérisé en ce que** le support d'informations (30) comprend au moins un capteur intégré dans celui-ci et le procédé comprend en plus une étape de mesure des données du processus par le capteur et
l'étape de lecture des données du support d'informations (30) comprend une étape de lecture des données de processus mesurées.

2. Procédé selon la revendication 1, le capteur étant un capteur de température.

3. Procédé selon la revendication 1 ou 2, le capteur étant un capteur d'humidité.

4. Procédé selon l'une des revendications 1 à 3, le procédé comprenant en plus une étape d'enregistrement des données de processus mesurées dans le support d'informations.

5. Procédé selon l'une des revendications précédentes, l'étape de lecture s'effectuant sans contact.

6. Procédé selon l'une des revendications précédentes, le support d'informations (30) étant un transpondeur.

7. Procédé selon l'une des revendications précédentes, les supports d'informations (30) étant disposés à intervalles réguliers sur le produit plan initial.

8. Procédé selon l'une des revendications précédentes, lequel comprend en plus une ou plusieurs étapes de traitement, notamment de chauffage, de refroidissement, de coloration, d'impression, d'imprégnation, de revêtement, de lavage, de séchage et/ou de laminage.

9. Dispositif de fabrication d'un produit plan (26) en utilisant un produit plan initial, notamment pour être utilisé dans un procédé selon l'une des revendications précédentes, comprenant :
- un dispositif pour disposer au moins un support d'informations (30) sur et/ou dans le produit plan initial ;
- un dispositif (28) pour lire les données du support d'informations (30) ;
- un dispositif pour adapter au moins un paramètre de processus en fonction des données lues,
le support d'informations (30) comprenant au moins un capteur intégré dans celui-ci, lequel est conçu pour mesurer les données de processus et
le dispositif (28) de lecture des données du support d'informations étant conçu pour lire les données de processus mesurées.

10. Dispositif selon la revendication 9, le dispositif (28) de lecture des données du support d'informations (30) étant conçu pour une lecture sans contact des données.

11. Dispositif selon l'une des revendications 9 ou 10, le support d'informations (30) étant un transpondeur et le dispositif (28) de lecture des données du support d'informations (30) étant un dispositif de lecture de transpondeur.

12. Dispositif selon l'une des revendications 9 à 11, lequel comprend en plus un ou plusieurs dispositifs de traitement (11, 12, 14, 15, 16, 18, 19, 22, 24), notamment des dispositifs de chauffage, de refroidissement, de coloration, d'impression, d'imprégnation, de revêtement, de lavage, de séchage et/ou de laminage.

13. Utilisation de supports d'informations (30) pour l'adaptation des paramètres de processus lors de la fabrication d'un produit plan (26) en utilisant un produit plan initial, au moins un support d'informations étant disposé sur le produit plan initial, **caractérisé en ce que** le support d'informations (30) comprend au moins un capteur intégré dans celui-ci, lequel est conçu pour mesurer les données de processus qui sont utilisées pour l'adaptation des paramètres de processus.
